# EUROPÄISCHE PATENTSCHRIFT

(11) **EP 3 601 975 B1**
(45) Veröffentlichungstag und Bekanntmachung des Hinweises auf die Patenterteilung: **29.12.2021**
(21) Anmeldenummer: 18705617.1
(22) Anmeldetag: 14.02.2018
(51) Int. Cl.: G01L 5/00, B23Q 17/00

(54) **SPANNKRAFTMESSGERÄTE UND DESSEN MODULE**
CLAMPING FORCE MEASURING INSTRUMENTS AND MODULES THEREOF
APPAREILS DE MESURE DE FORCE DE SERRAGE ET MODULES ASSOCIÉS

(30) Priorität: 24.03.2017 DE 102017205024
(43) Veröffentlichungstag der Anmeldung: 05.02.2020
(73) Patentinhaber: Hainbuch GmbH Spannende Technik, 71672 Marbach (DE)
(72) Erfinder: KELLER, Andreas, 71672 Marbach (DE); IVENZ, Sebastian, 71723 Grossbottwar (DE)
(74) Vertreter: Patentanwaltskanzlei Cartagena
(86) Internationale Anmeldenummer: PCT/EP2018/053700
(87) Internationale Veröffentlichungsnummer: WO 2018/171981

(56) Entgegenhaltungen:
- EP-A1- 0 074 524
- DE-B3-102004 003 271
- DE-B3-102010 011 318
- JP-A- H07 308 808

## Beschreibung

### ANWENDUNGSGEBIET UND STAND DER TECHNIK

Die Erfindung betrifft ein Spannkraftmessgerät für Radialspannmittel nach Anspruch 1.

Gattungsgemäße Spannkraftmessgeräte dienen der Prüfung und ggf. der Kalibrierung von Radialspannmitteln, also von Innen- oder Außenspannmittel, die durch radiale Verlagerung von Spannbacken ein üblicherweise im Wesentlichen rotationssymmetrisches Werkstück zum Zwecke der Bearbeitung, insbesondere der spanenden Bearbeitung bei rotierendem Werkstück, festspannen.

Zur Erzielung hoher Genauigkeiten bei dieser Bearbeitung ist es erforderlich, eine vorgesehene Spannkraft möglichst genau einzuhalten. Eine zu geringe Spannkraft kann dazu führen, dass sich das Werkstück aufgrund der darauf wirkenden Bearbeitungskräfte gegenüber dem Spannmittel bewegt, so dass mindestens eine verschlechterte Bearbeitungsqualität die Folge ist. Eine zu hohe Spannkraft kann zu Beschädigungen des Werkstücks führen, beispielsweise durch Verformung dünnwandiger Werkstücke.

Gattungsgemäße Spannkraftmessgeräte gestatten die Prüfung des Spannmittels, indem sie in exakt kalibriertem Zustand statt eines Werkstücks in das Spannmittel eingespannt werden und im Bereich der anliegenden Spannbacken des Spannmittels die dort aufgebrachte Spannkraft messen. Bekannt ist hierfür beispielsweise ein Spannkraftmessgerät der Firma Hainbuch Spannende Technik GmbH, welches unter dem Namen "TestIt" angeboten wird.

Dieses Spannkraftmessgerät umfasst neben den Messflächen zur Anlage an den Spannbacken und dem mindestens einen Kraftsensor, der die auf die Messfläche wirkende Kraft misst, auch die elektronischen Komponenten zur Speicherung und Weitergabe der erfassten Daten. Ein Messverstärker korrigiert das gemessene Signal ggf. auf Basis von individuellen Kalibrierungswerten des Spannkraftmessgeräts. Die so erfassten und ggf. korrigierten Daten werden per Funk oder Kabelverbindung an einen Zentralrechner weitergereicht und dort weiterverarbeitet.

Nutzer solcher Spannkraftmessgeräte haben üblicherweise eine Mehrzahl hiervon, um unterschiedliche Spannmittel prüfen zu können. Die verschiedenen Spannkraftmessgeräte unterscheiden sich hinsichtlich der Anordnung der Messflächen (nach außen oder innen weisend) und hinsichtlich des Durchmessers und ggf. der Spannkräfte, für die sie vorgesehen sind.

In der Praxis sind einige Nachteile des bisherigen Systems zu verzeichnen. Zum einen sind die Kosten der Spannkraftmessgeräte aufgrund zum Teil sehr teurer Komponenten recht hoch, insbesondere wenn eine große Zahl unterschiedlicher Spannmittel regelmäßig zu prüfen ist. Zum anderen ist der administrative Aufwand recht hoch, da die erfassten Daten üblicherweise zum Zwecke der Weiterverarbeitung von den einzelnen Spannkraftmessgeräten an einem Rechner zusammengeführt werden und somit vielfältige Datenübertragungen erforderlich sind. Ebenfalls mitunter nachteilig ist es, dass die Spannkraftmessgeräte regelmäßig aufgeladen werden müssen und somit die Situation nicht selten ist, dass ein Einsatz nicht wie geplant erfolgen kann, da nicht alle Spannkraftmessgeräte ausreichend geladen wurden.

Aus der DE 102004003271 B3 ist eine Vorrichtung zum Prüfen der Spannkraft von Spannvorrichtungen bekannt. Diese umfasst einen Messdorn und eine hiermit verbundene Anzeigevorrichtung zur Darstellung der am Messdorn gemessenen Kraft.

Aus der DE 102010011318 B3 ist eine Messeinrichtung zur Kraftmessung an mindestens einer Kraftspannspindel bekannt. Die insbesondere mehreren Kraftspannspindel sind an einer Aufspannscheibe angebracht, erfasst die dort anliegende Spannkraft und übermitteln diese drahtlos an eine externen Auswertungseinheit.

### AUFGABE UND LÖSUNG

Aufgabe der Erfindung ist es, ausgehend von bekannten Spannkraftmessgeräten eine kostengünstigere und bezüglich der Handhabung des Gerätes und der hiermit gewonnenen Daten einfache Alternative zu bekannten gattungsgemäßen Spannkraftmessgeräten zur Verfügung zu stellen.

Diese Aufgabe wird erfindungsgemäß gelöst mit einem Spannkraftmessgerät für Radialspannmittel nach Anspruch 1.

Übereinstimmend mit gattungsgemäßen Spannkraftmessgeräten weist das erfindungsgemäße Spannkraftmessgerät mindestens einen Kraftsensor zur Erfassung einer Spannkraft auf, die von einem zu prüfenden Spannmittel bezogen auf eine Mittelachse in Radialrichtung nach außen oder in Radialrichtung nach innen auf mindestens eine Messfläche des Spannkraftmessgerätes aufgebracht wird.

Zur Auswertung der hier ermittelten Sensordaten weist das Spannkraftmessgerät eine Auswerteeinrichtung auf. Diese umfasst eine Funkschnittstelle zur Übermittlung von Daten an einen Empfänger und/oder einen Speicher zur Ablage von Daten zum Zwecke des späteren Auslesens über eine Kabelverbindung oder eine Funkverbindung und/oder eine Anzeigeeinrichtung zur Anzeige von Daten.

Beim erfindungsgemäßen Spannkraftmessgerät ist dabei folgendes vorgesehen: Das Spannkraftmessgerät ist als modulares Spannkraftmessgerät ausgebildet und weist mindestens zwei Module, nämlich ein Auswertemodul und ein Sensormodul, auf.

Das Sensormodul umfasst mindestens die Messfläche und den Kraftsensor. Das Auswertemodul weist mindestens die Funkschnittstelle, den Speicher und/oder die Anzeigeeinrichtung auf.

Die beiden Module sind zur mechanischen Ankoppelung aneinander mittels einer Kopplungseinrichtung der Spannkraftmessgerät ausgebildet und weisen jeweils eine Datenverbindungseinrichtung auf, wobei die beiden Datenverbindungseinrichtungen im Zuge der Ankoppelung des Sensormoduls an das Auswertemodul miteinander zur Herstellung einer Datenverbindung verbunden werden können.

Die Besonderheit des erfindungsgemäßen Spannkraftmessgeräts liegt demnach darin, dass es aus Modulen besteht, die in wechselnden Konstellationen fallweise zusammengefügt werden können. Hierdurch wird es insbesondere möglich, dasselbe Auswertemodul mit verschiedenen Sensormodulen zu versehen, um dadurch verschiedene Spannmittel prüfen zu können, die sich insbesondere durch den Typ (Innenspannmittel oder Außenspannmittel) und/oder verschiedene Durchmesser unterscheiden können. Auch die Verwendung des Auswertemoduls mit einem Sensormodul, das zur Erfassung axialer Spannkräfte, beispielsweise im Bereich einer Werkzeugschnittstelle des Typs SK oder HSK, ist möglich.

Unter einem Modul im Sinne der Erfindung wird eine separat handhabbare Einheit verstanden, wobei jedes Modul über ein eigenes Gehäuse verfügt. Da gattungsgemäße Spannkraftmessgeräte üblicherweise sowohl im ruhenden Zustand des Spannmittels als auch im rotierenden Zustand geprüft werden, sind die Gehäuse jeweils vorzugsweise im Wesentlichen symmetrisch, insbesondere rotationssymmetrisch, um Unwuchten zu vermeiden.

An diesen Gehäusen sind jeweils Teilabschnitte der gemeinsamen Kopplungseinrichtung vorgesehen, wobei die Kopplungseinrichtung für eine wiederholte und unkomplizierte Trennung und erneute Zusammenfügung ausgebildet ist. Gleichzeitig mit der mechanischen Kopplung oder im Vorfeld oder Nachgang der mechanischen Kopplung werden auch die Datenverbindungseinrichtungen beider Module miteinander verbunden, so dass die Komponenten der Module miteinander kommunizieren können, insbesondere damit Sensordaten des mindestens einen Kraftsensors an das Auswertemodul übermittelt werden können.

Die Modularisierung hat verschiedene Vorteile. Einer dieser Vorteile liegt in den Kosten begründet. Das flexibel einsetzbare Auswertemodul kann den überwiegenden Teil besonders teurer Einzelkomponenten in sich vereinigen, so dass diese nicht mehrfach als Teil mehrerer nicht modularer Spannkraftmessgeräte erworben werden müssen. Darüber hinaus kann es von Vorteil sein, die Messdaten für viele ggf. auch typunterschiedliche Spannmittel in einem Gerät, dem Auswertemodul, zu vereinigen.

Wesentlicher Teil des Sensormoduls ist der mindestens eine Kraftsensor, der die vom Spannmittel aufgebrachte Spannkraft misst. Für dessen Anordnung am Sensormodul bestehen vielfältige Möglichkeiten. So kann das Sensormodul im einfachsten Falle zwei, drei oder vier Messflächen zur Verfügung stellen, an denen das Spannmittel angreift und die dadurch kraftbeaufschlagt werden, wobei jedoch nur die Verlagerung einer der Messfläche durch den Sensor sensiert wird. Eine andere bevorzugte Gestaltung sieht vor, dass der Kraftsensor in Art eines Dehnungssensors ausgebildet ist, der in Umfangsrichtung auf einem Ring angebracht wird, dessen Aufweitung gemessen wird, woraus wiederum auf die die Aufweitung bewirkende Kraft geschlossen werden kann. Grundsätzlich wird im Sinne der Erfindung jeder Sensor am Sensormodul als Kraftsensor angesehen, der zumindest mittelbar die Ermittlung der radial wirkenden Spannkraft des Spannmittels ermitteln kann. Der mindestens eine Kraftsensor der Sensoreinheit ist vorzugsweise als Dehnungsmessstreifen (DMS) ausgebildet, wobei dieser insbesondere auf einem durch Kraftbeaufschlagung sich aufweitenden Ringsegment tangential oder auf einem auf Stauchung oder Zug belasteten Messbolzen axial oder radial aufgebracht sein kann.

Zusätzlich zu den erfindungsgemäß zwingend dem Auswertemodul zugeordneten Komponenten umfasst dieses vorzugsweise mindestens einen zusätzlichen Sensor. Hierbei kann es sich insbesondere um einen Sensor zur Erfassung der Drehzahl und/oder einen Sensor zur Erfassung einer Temperatur handeln. Solche zusätzlichen Sensoren, die zur Erfassung von Größen vorgesehen sind, die nicht in unmittelbarem Zusammenhang mit dem spezifischen Spannmittel stehen, sind vorzugsweise Teil des Auswertemoduls, da diese Sensoren dann in geringerer Stückzahl benötigt werden und mit mehreren Sensormodulen verwendet werden können.

Das Auswertemodul umfasst weiterhin vorzugsweise mindestens einen Messverstärker. Dieser Messverstärker verstärkt oder modifiziert anderweitig das Ausgangssignal mindestens eines der Kraftsensoren. Zusätzlich gehören ggf. auch eine Digitalisierung der Signale und eine Korrektur anhand von sensorspezifischen Kalibrierungswerten zu den Aufgaben der Messverstärker-Einheit.

Zwar steht der Messverstärker aufgrund seiner möglicherweise vorgesehenen Korrekturen anhand von sensorspezifischen Kalibrierungswerten in engem Zusammenhang mit dem konkreten Kraftsensor, so dass grundsätzlich die Zuordnung zum Sensormodul naheliegender erscheinen könnte. Es handelt sich beim Messverstärker jedoch um eine vergleichsweise teure Komponente, sodass das Einsparpotential durch Verlagerung des Messverstärkers in das Auswertemodul erhebliche wirtschaftliche Vorteile mit sich bringt.

Um das hieraus ggf. entstehende Problem zu lösen, dass der Messverstärker flexibel Kalibrierungswerte für verschiedene Sensoren berücksichtigen muss, bestehen verschiedene Möglichkeiten, die jeweils darauf basieren, dass der Messverstärker im Auswertemodul das angekoppelte Sensormodul individuell berücksichtigt.

Das Sensormodul verfügt hierzu vorzugsweise über einen Speicher, in welchem eine eindeutige Kennzeichnung des Sensormoduls bzw. der dortigen Sensoren und/oder Kalibrierungsdaten hinsichtlich eines oder mehrerer Sensoren des Sensormoduls abgelegt ist. Dies gestattet es dem Auswertemodul nach Auslesen dieser Daten aus dem Speicher des Sensormoduls die Sensordaten des Sensormoduls individuell anhand von Kalibrierungswerten zu korrigieren, entweder unmittelbar auf Basis von Kalibrierungswerten im Speicher des Sensormoduls oder aber anhand einer Tabelle mit sensorspezifischen oder sensormodulspezifischen Kalibrierungswerten im Auswertemodul, aus der die passenden Kalibrierungsdaten anhand der eindeutigen Kennzeichnung aus dem Speicher des Sensormoduls ausgewählt werden können. Diese Tabelle kann in einem Speicher des Auswertemoduls abgelegt sein.

Der Speicher des Sensormoduls kann zusätzlich oder alternativ auch andere Werte beinhalten, so beispielsweise Daten zum Modell des Sensormoduls oder der verwendeten Sensoren (Typ, Versionsnummer oder dergleichen) und/oder Daten hinsichtlich durchgeführter oder in Zukunft durchzuführender Werkskalibrierungen.

Der Speicher ist vorzugsweise als EEPROM oder Flash EEPROM ausgebildet, um überschreibbar zu sein, insbesondere durch das Auswertemodul oder auf Anweisung des Auswertemoduls. Für einige Daten wie insbesondere die Seriennummer oder Daten zum Modell des Sensormoduls oder der darin verwendeten Sensoren kann jedoch auch Festspeicher (ROM) verwendet werden.

Das Auswertemodul verfügt vorzugsweise über eine Funkschnittstelle nach dem Bluetooth-Standard, insbesondere vom Typ "Bluetooth Low Energy (LE)". Alternativ oder zusätzlich verfügt das Auswertemodul zum Zwecke des Ladens eines Energiespeichers des Spannkraftmessgeräts und/oder zum Zwecke der Übermittlung von gespeicherten Messdaten an einen Rechner über eine USB-Schnittstelle.

Grundsätzlich ist es zwar nicht zwingend erforderlich, dass Daten, die im Auswertemodul gespeichert sind, von hier auf einen Rechner oder dergleichen übertragen werden. In der Praxis ist dies jedoch zumindest zum Zwecke der Datensicherung wünschenswert. Die Funkübertragung und die Übertragung per USB-Verbindung werden hierbei bevorzugt. Grundsätzlich möglich ist alternativ auch eine Entnehmbarkeit des als Speicherkarte ausgebildeten Speichers aus dem Auswertemodul.

Insbesondere der genannte "Bluetooth LE"-Funkstandard ist in der Praxis sehr wertvoll, da er es aufgrund seiner Effizienz gestattet, ein Auswertemodul über mehrere Monate oder gar Jahre zu verwenden, ohne dessen Energiespeicher aufladen zu müssen. Die Verwendung einer USB-Schnittstelle zum Aufladen des Auswertemoduls bietet den Vorteil, dass das Aufladen auch von einem Laptop oder einem externen Akkumulator mit USB-Anschluss vor Ort erfolgen kann und das Auswertemodul somit an einem eingespannten Sensormodul angekoppelt bleiben kann.

Vorzugsweise verfügt nur eines der Module über einen Energiespeicher in Form einer Batterie oder eines Akkumulators und ist dafür ausgebildet, elektronische Komponenten des anderen Moduls im Betrieb mit Energie zu versorgen. Dabei wird es als bevorzugt angesehen, wenn das Auswertemodul den Energiespeicher aufweist und jeweils angekoppelte Sensormodule mit Strom versorgt, so dass diese keinen eigenen Energiespeicher aufweisen müssen.

Die Kopplung der Module sieht vor, dass diese mittels der Kopplungseinrichtung auf einfache und schnelle Art miteinander verbunden und voneinander gelöst werden können. Vorzugsweise gleichzeitig mit der mechanischen Kopplung erfolgt dabei auch eine Kopplung der jeweiligen Datenverbindungseinrichtungen, um hierüber Sensordaten und ggf. weitere Daten übertragen zu können.

Die Kopptungseinrichtung für die mechanische Kopplung weist gemäß einer Ausgestaltung eine Mehrzahl von Schrauben auf, vorzugsweise maximal vier Schrauben, mittels derer das Auswertemodul am Sensormodul festschraubbar ist. Zwar ist diese Art der Kopplung üblicherweise nicht werkzeuglos möglich. Im Bereich des Anwendungsfeldes von Spannkraftmessgeräten ist dieser Nachteil jedoch verschmerzbar, da hier das passende Werkzeug üblicherweise zur Hand ist. Zudem ist eine solche Schraubverbindung auch für Messungen bei rotierendem Spannmittel hinsichtlich ihrer Sicherheit ideal.

Denkbar ist jedoch alternativ auch eine Kopplungseinrichtung, die als werkzeuglos koppelbare Kopplungseinrichtung ausgebildet ist. Hier können beispielsweise Flügelschrauben oder eine Bajonettkopplungseinrichtung Verwendung finden.

Betreffend die Datenverbindungseinrichtungen ist grundsätzlich eine sehr einfache Bauweise möglich, bei der eines der Module einen Stecker oder eine Buchse aufweist, die mittels Kabel manuell an einer korrespondierenden Buchse oder einem korrespondierenden Stecker des anderen Moduls angekoppelt werden kann. Eine solche Gestaltung ist in der Praxis jedoch recht unpraktisch.

Bevorzugt wird daher, dass die genannten Datenverbindungseinrichtungen zur Datenkopplung der Module derart ausgebildet und fest an den Modulen angeordnet sind, dass die Verbindung gleichsam automatisch durch das mechanische Koppeln der Module hergestellt wird. Besonders bevorzugt ist hierbei, dass die Datenverbindungseinrichtung auf der Seite eines der Module Kontaktflächen aufweist. Auf der Seite des anderen Moduls weist die Datenverbindungseinrichtung federkraftbelastete Kontaktelemente zur Anlage an den Kontaktflächen auf. Die federkraftbelasteten Kontaktelemente sind vorzugweise am Auswertemodul vorgesehen. Die Datenverbindungseinrichtungen sind demnach derart angeordnet, dass sie im Zuge der mechanischen Kopplung automatisch in konnektierte Anlage aneinander gelangen. Dies erleichtert den Wechsel des Sensormoduls erheblich.

Die Kontaktflächen und die Kontaktelemente können zur Anlage in nur einer oder zwei Relativdrehstellungen der Module zueinander ausgebildet sein. Dabei ist vorzugsweise eine Ausrichtungshilfe vorgesehen, die eine Koppelung der Module nur in dieser einen oder diesen beiden Ausrichtungen gestattet. Diese Bauweise ist in Hinblick auf die Anforderungen an Kontaktflächen und Kontaktelemente vergleichsweise einfach. Diese können zentral im Bereich der Mittelachse oder auch exzentrisch angeordnet sein. Durch die Ausrichtungshilfe, insbesondere in Form formschlüssiger Ausrichtungsmittel mit Stift und Bohrung an den beiden Modulen, ist gewährleistet, dass die Kontaktflächen und Kontaktelemente sicher und positionsgenau aneinander zum Anliegen gelangen.

Die Kontaktflächen können alternativ auch als konzentrische ringförmige Kontaktflächen zur Anlage an den Kontaktelementen unabhängig von der Relativdrehstellungen der Module zueinander ausgebildet sein. Dies erleichtert den Wechsel von Sensormodulen, da auf die rotative Relativausrichtung nicht geachtet werden muss. Allerdings sind die mechanischen Anforderungen aufgrund des Schleifkontaktes zwischen Kontaktflächen und Kontaktelementen im Zuge der Kopplung höher, so dass der Vorteil des vereinfachten Wechsels nicht in jedem Fall erheblich sein muss.

Wie bereits erwähnt, wird die Datenverbindungseinrichtung nicht nur zur Übertragung von Sensordaten verwendet, sondern ggf. auch für andere Daten, wobei aus Perspektive des Auswertemoduls sowohl lesende als auch schreibende Zugriffe vom Sensormodul bzw. auf das Sensormodul vorgesehen sein können. Zur Übertragung dieser anderen Daten, insbesondere von Kalibrierungsdaten, Modelldaten oder Seriennummern oder dergleichen, ist eine digitale Übertragung geboten. Die Sensordaten selbst können analog oder digital übertragen werden, wobei die analoge Übertragung bevorzugt wird, um den Bedarf für einen D/A-Wandler auf Seiten des Sensormoduls zu vermeiden. Die Datenverbindungseinrichtung ist daher vorzugsweise als kombinierte analoge und digitale Datenverbindungseinrichtung ausgebildet.

Vorzugsweise ist das Auswertemodul, insbesondere mittels eines in das Auswertemodul integrierten Mikroprozessors, dafür ausgebildet, die Datenverbindung zusätzlich zur Übermittlung von Sensordaten des mindestens einen Kraftsensors und ggf. weiterer Sensoren des Sensormoduls zu weiteren Zwecken zu nutzen.

Gemäß einem ersten Erfindungsaspekt wird die Datenverbindung auch genutzt, um mindestens die eindeutige Kennzeichnung des Sensormoduls und ggf. auch Daten zum Modell des Sensormoduls auszulesen und gemeinsam mit den Sensordaten abzulegen, zu übermitteln oder anzuzeigen

Gemäß einem zweiten Erfindungsaspekt ist die Datenverbindung weiterhin dafür ausgebildet, es dem Auswertemodul zu gestatten, Kalibrierungsdaten hinsichtlich eines oder mehrerer Sensoren des Sensormoduls auszulesen und zur Korrektur der Sensordaten heranzuziehen und/oder aktualisierte Kalibrierungsdaten in einen Speicher des Sensormoduls zu schreiben.

Die genannten Kalibrierungsdaten werden üblicherweise ermittelt, indem das Sensormodul regelmäßig in ein Spannmittel mit einem Referenzmesssystem eingesetzt wird, um die nötigen Kalibrierungsdaten hier zu ermitteln. Üblicherweise erfolgt dies beim Hersteller des Spannkraftmessgerätes (Werkskalibrierung). Die ermittelten Kalibrierungsdaten werden dann im Speicher des Sensormoduls gespeichert oder alternativ in zentralen Kalibrierungsdatentabellen abgelegt, insbesondere im Speicher des Auswertemoduls.

Darüber hinaus kann die Datenverbindung dafür vorgesehen sein, es dem Auswertemodul zu gestatten, Daten hinsichtlich durchgeführter oder in Zukunft durchzuführender Werkskalibrierungen vom Sensormodul auszulesen und bei diesbezüglichem Handlungsbedarf eine Signalisierung vorzunehmen. Das Sensormodul kann also die Daten liefern, die für eine Beurteilung benötigt werden, ob eine erneute Werkskalibrierung erforderlich ist. Bei Ankoppelung an das Auswertemodul erkennt dieses den Bedarf und signalisiert dies, beispielsweise optisch oder akustisch oder aber dadurch, dass eine entsprechende Mitteilung an einen mit dem Auswertemodul verbundenen Rechner übermittelt wird.

Die Module sind vorzugsweise zur Kommunikation über die Datenverbindung nach dem Standard IEEE 1451 ausgebildet, wobei vorzugsweise vorgesehen ist, dass das Sensormodul im Speicher über ein TEDS (Transducer Electronic Data Sheet) nach diesem Standard verfügt. TEDS bildet dabei eine Art Datenstruktur, die für die Speicherung von ergänzenden Daten in einer dem Sensor zugeordneter Form vorgesehen ist. Die Verwendung des genannten Standards und einer solchen TEDS-Datenstruktur vereinfacht die Entwicklung des Spannkraftmessgerätes und gestattet den Rückgriff auf bereits hierfür verfügbare Komponenten und Konzepte.

Das Auswertemodul umfasst vorzugsweise mindestens eine Status-Anzeige, insbesondere in Form einer oder mehrerer LEDs, zur Anzeige des Status eines Energiespeichers und/oder zur Anzeige des Status einer Datenverbindung mit dem Sensormodul und/oder zur Anzeige des Status einer funkbasierten Verbindung. Eine solche Statusanzeige kann auf sehr einfache Weise grundlegende Signalisierungen vornehmen, beispielsweise den Status einer Funkverbindung oder eines Energiespeichers anzeigen oder den Bedarf einer Werkskalibrierung des angekoppelten Sensormoduls.

Abweichend oder ergänzend hierzu ist auch eine Ausgestaltung mit einer größeren Anzeigevorrichtung, also einem zur Datenausgabe geeigneten Display, möglich. Im Kontext des vorliegenden modularen Spannkraftmessgerätes kann eine solche Anzeigevorrichtung am Auswertemodul im Einzelfall vollständig oder weitgehend den Bedarf beseitigen, die Daten an einen Rechner oder dergleichen weiterzuleiten.

Das Auswertemodul ist vorzugsweise dafür ausgebildet, die Funkschnittstelle zur Übermittlung von Sensordaten an eine Zentralstation nur zeitweise zu aktivieren, insbesondere gemäß einem vorgegebenen Zeitplan oder in Reaktion auf die Erfassung von Daten von einem Sensormodul.

Das beschriebene Konzept eines Spannkraftmessgerätes ist insbesondere bei Sonder-Spannkraftmessgeräten von Vorteil, insbesondere solchen, bei denen das Sensormodul mehrere Kraftsensoren aufweist, die in unterschiedlichen in Richtung der Mittelachse gegeneinander versetzten Ebenen angeordnet sind, und/oder bei denen das Sensormodul mehrere Kraftsensoren aufweist, die bezogen auf die Mittelachse in einer gemeinsamen Ebene, jedoch tangential gegeneinander versetzt angeordnet sind.

Während für die meisten Anwendungsfälle üblicherweise Spannkraftmessgeräte Verwendung finden, die nur über einen Kraftsensor verfügen, kann es in besonderen Fällen gewünscht sein, mehrere Kraftsensoren vorzusehen, die in Umfangsrichtung oder in Erstreckungsrichtung der Mittelachse gegeneinander versetzt sind. Entsprechende Sonder-Spannkraftmessgeräte sind in der Vergangenheit üblicherweise für den spezifischen Anwendungszweck konstruiert worden. Das erfindungsgemäße modulare Konzept gestattet es, den Aufwand hierfür deutlich zu verringern, da ein einheitliches Auswertemodul Verwendung finden kann, so dass nur das Sensormodul fallweise oder kundenspezifisch anzupassen ist. Allerdings hat ein geeignetes Auswertemodul in diesem Falle üblicherweise mehr Kanäle, um die analogen Sensordaten gleichzeitig an das Auswertemodul zu übertragen. Dabei ist vorzugweise ein mehrkanaliger Messverstärker zur Auswertung der Sensordaten vorgesehen oder es sind mehrere Messverstärker zur getrennten Verstärkung der Sensordaten unterschiedlicher Kraftsensoren vorgesehen.

Das Sensormodul für ein erfindungsgemäßes Spannkraftmessgerät verfügt vorzugsweise über mindestens einen Kraftsensor zur Erfassung einer Spannkraft, die von einem Spannmittel bezogen auf eine Mittelachse in Radialrichtung nach außen oder in Radialrichtung nach innen auf Messflächen des Sensormodul aufgebracht wird, und welches weiterhin über eine Kopplungseinrichtung zur Ankoppelung an ein Auswertemodul beschriebener Art und eine Datenübermittlungseinrichtung zur Übertragung von Sensordaten an das Auswertemodul verfügt.

Das Auswertemodul für das beschriebene Spannkraftmessgerät verfügt über eine Kopplungseinrichtung zur Ankoppelung an ein Sensormodul der beschriebenen Art und eine Datenübermittlungseinrichtung zur Übertragung von Sensordaten vom Auswertemodul. Es verfügt weiterhin über eine Funkschnittstelle zur Übermittlung von Daten an einen Empfänger und/oder über einen Speicher zur Ablage von Daten zum Zwecke des späteren Auslesens über eine Kabelverbindung oder eine Funkverbindung und/oder über eine Anzeigeeinrichtung zur Anzeige von Daten. Ein solches Auswertemodul kann auch für Sensormodule verwendet werden, die statt einer radial gerichteten Spannkraft eine axial gerichtete messen, wie sie beispielsweise für das Spannen von Werkzeugschnittstellen genutzt wird.

Üblicherweise findet ein erfindungsgemäßes Spannkraftmessgerät als Teil eines Sets Anwendung, welches über ein Auswertemodul und über eine Mehrzahl von Sensormodulen verfügt. Diese Konstellation, in der mehr Sensormodule als Auswertemodule als Teil eines gemeinsamen Sets genutzt werden, stellt die bestimmungsgemäße Verwendung des erfindungsgemäßen Spannkraftmessgeräts dar.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Spannkraftmessgerät in seiner modularen Ausgestaltung mit zwei Einzelmodulen.
Fig. 2 zeigt exemplarisch die Verwendung des Spannkraftmessgerätes der Fig. 1.
Fig. 3 zeigt in separater Darstellung eine erste Variante eines Sensormoduls für das Spannkraftmessgerät.
Fig. 4A und 4B zeigen eine zweite Variante eines Sensormoduls für das Spannkraftmessgerät.
Fig. 5A und 5B zeigen in zwei Perspektiven das Auswertemodul des Spannkraftmessgerätes.
Fig. 6 und 7 verdeutlichen den Ankoppelungsvorgang, mittels dessen das jeweilige Sensormodul und das Auswertemodul zum Zwecke der nachfolgenden Verwendung zu einer Einheit zusammengefügt werden.

### DETAILLIERTE BESCHREIBUNG DER AUSFÜHRUNGSBEISPIELE

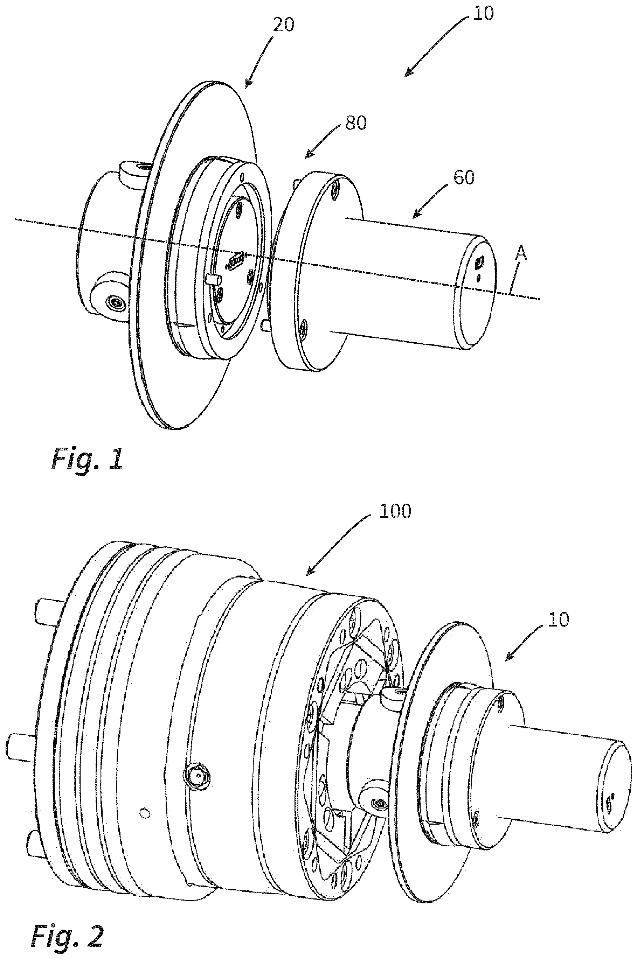

Fig. 1 zeigt zunächst sehr allgemein das Grundkonzept eines erfindungsgemäßen Spannkraftmessgerätes 10. Dieses Spannkraftmessgerät 10 verfügt über zwei Module, nämlich ein Auswertemodul 60 und ein Sensormodul 20, die mittels einer Kopplungseinrichtung 80 miteinander fallweise gekoppelt werden können. Ein weiterer Typ eines Sensormoduls 40 ist in den nachfolgenden Figuren ebenfalls dargestellt.

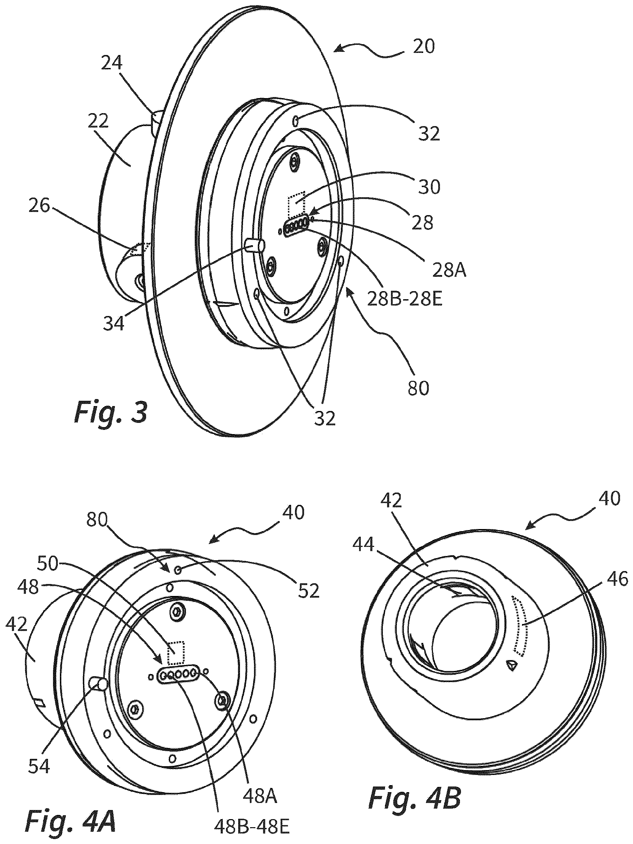

Die beiden Module 20, 60 bilden im zusammengefügten Zustand, der beispielsweise aus Fig. 2 ersichtlich ist, gemeinsam das Spannkraftmessgerät 10. Durch die modulare Gestaltung ist es möglich, das gleiche Auswertemodul 60 nicht nur mit dem in den Fig. 1 bis 3 dargestellten Sensormodul zu verwenden, sondern auch mit dem alternativen Sensormodul, welches in den Fig. 4A und 4B dargestellt ist. Die Gesamtfunktionalität des Spannkraftmessgerätes ist auf die beiden Module 20, 60 verteilt, wie im Weiteren noch näher erläutert wird.

Fig. 2 zeigt, wie das aus den beiden Einzelmodulen 20 bzw. 40 und 60 zusammengesetzte Spannkraftmessgerät 10 in ein Spannmittel 100 in Form eines Backenfutters eingesetzt wird. Bereits an dieser Stelle sei darauf hingewiesen, dass das Spannkraftmessgerät 10 über Messflächen 24 verfügt, die nach Einsetzen des Spannkraftmessgerätes 60 in das Spannmittel 100 durch ein Spannen des Spannmittels 100 kraftbeaufschlagt werden. Zumindest an einer dieser Messflächen wird die Auslenkung erfasst, um hierdurch mittelbar die durch das Spannmittel 100 aufgebrachte Kraft zu messen zum Zwecke der nachfolgenden Weiterverarbeitung.

Grundsätzlich ist zur Aufgliederung der Funktionalität des Spannkraftmessgerätes auf die Sensormodule 20, 40 einerseits und das Auswertemodul 60 andererseits festzustellen, dass es zweckmäßig ist, zum Zwecke einer einfachen Ausgestaltung und einem demzufolge geringen Preis die Sensormodule 20, 40 vergleichsweise einfach zu gestalten und die vergleichsweise teuren Teilkomponenten - soweit möglich - im Auswertemodul 60 vorzusehen.

Die Fig. 3 sowie 4A und 4B zeigen die Einzelkomponenten der Sensormodule 20, 40. Beim Sensormodul 20, welches in Fig. 3 dargestellt ist, handelt es sich um ein Sensormodul 20 zur Prüfung von Außenspannmitteln, also Spannmitteln, deren Spannflächen bzw. Spannbacken durch radiale Verlagerung nach innen in Richtung einer Mittelachse A die Spannkraft aufbringen. Das Gehäuse des Sensormoduls 20 weist einen in etwa zylindrischen Messbereich 22 auf, an dessen Außenseite über den Umfang verteilt insgesamt drei Messflächen 24 vorgesehen sind, die in nicht näher dargestellter Weise auf Messbolzen und daran angebrachte Kraftsensoren 26 wirken. Tatsächlich gibt es viele Möglichkeiten der Anordnung und Ausgestaltung des Kraftsensors 26, beispielsweise in radialer oder tangentialer Ausrichtung.

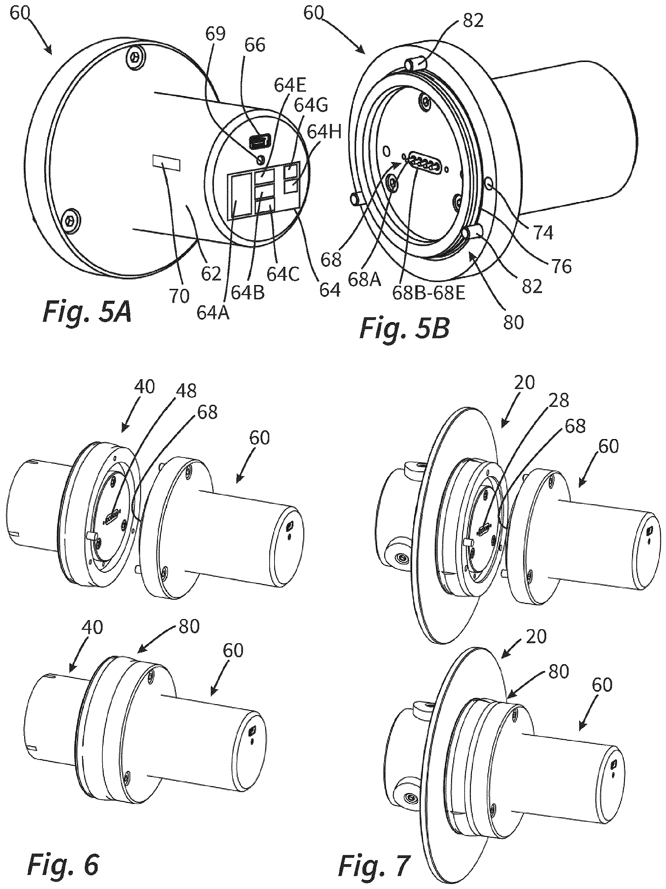

Auf der dem Messbereich 22 abgewandten Seite des Sensormoduls 20 ist dieses mit einem Teil einer Kopplungseinrichtung 80 versehen. Diese Kopplungseinrichtung verfügt zum Zwecke der mechanischen Kopplung über drei Gewindelöcher 32 und einen Ausrichtungsstift 34. Das Zusammenwirken des Auswertemoduls mit diesem Teil der Kopplungseinrichtung 80 wird anhand der Fig. 5A, 5B sowie 6 und 7 im Weiteren noch erläutert. Zusätzlich zu den Mitteln zur mechanischen Kopplung ist eine Datenübermittlungseinrichtung 28 auf der dem Messbereich abgewandten Seite vorgesehen. Es handelt sich um insgesamt fünf Kontaktflächen, die zusätzlich zu einer Masseverbindung vorgesehen sind. Die erste Kontaktfläche 28A ist für eine digitale Datenübertragung vorgesehen, die im Weiteren noch erläutert wird. Die anderen vier Kontaktflächen sind für eine analoge Übertragung der Daten des Kraftsensors 26 vorgesehen. Zusätzlich verfügt das Sensormodul 20 über einen Speicher 30, in welchem verschiedene Daten abgelegt sein können, insbesondere in digitaler Form der Typ des Sensormoduls 20 bzw. seiner Sensoren 26, der Zeitpunkt der letzten oder nächsten Werkskalibrierung, die aktuell gespeicherten Kalibrierungsdaten zur Korrektur von Messdaten des Kraftsensors 26 sowie eine eindeutige Seriennummer des Sensormoduls 20.

Die Fig. 4A und 4B zeigen entsprechend der Fig. 3 ein zweites Sensormodul 40, welches als Sensormodul 40 zur Überprüfung von Innenspannmitteln ausgebildet sind. Zu diesem Zweck ist der zylindrische Messbereich 42 hier in Art eines Hohlzylinders ausgestaltet, an dessen Innenseite die Messflächen 44 und an dessen Außenseite der mindestens eine Kraftsensor 46 vorgesehen ist. Auf der gegenüberliegenden Seite, die in Fig. 4A dargestellt ist, entsprechen die Verhältnisse nahezu identisch jenen des Sensormoduls der Fig. 3. Auch hier ist eine mechanische Kopplungseinrichtung vorgesehen, die über Gewindelöcher 52 und einen Ausrichtungsstift 54 verfügt. Auch die Datenübermittlungseinrichtung 48 entspricht von ihrem Aufbau jener Datenübermittlungseinrichtung 28 der Ausgestaltung der Fig. 3, mitsamt der Anbindung eines Digitalkanals an den Speicher 50 und einer Analogdatenverbindung mit dem Kraftsensor 46.

Die Fig. 5A und 5B zeigen das Auswertemodul als Gegenstück zu den beiden Sensormodulen 20, 40 der vorangegangenen Figuren. Das Auswertemodul 60 verfügt über ein Gehäuse 62, an dem korrespondierend zur Kopplungseinrichtung 80 der Sensormodule 20, 40 und der dortigen Datenübermittlungseinrichtungen 28, 48 Durchgangsbohrungen mit Schrauben 72 sowie eine Bohrung 74 zur Aufnahme des Ausrichtungsstiftes 34, 54 vorgesehen ist. Die Datenübermittlungseinrichtung ist hier etwas anders gestaltet, da keine Kontaktflächen 28A bis 28E vorgesehen sind, sondern stattdessen federnd auslenkbare Kontaktstifte 68A bis 68E. Diese legen sich bestimmungsgemäß an die Kontaktflächen 28A bis 28E bzw. 48A bis 48E an, wenn das Auswertemodul 60 an eines der Sensormodule 20, 40 mittels der Schrauben 72 angeschraubt wird. Zusätzlich ist eine Dichtung 76 vorgesehen, die im Betrieb verhindert, dass Verschmutzungen in den Bereich der elektrischen Kontaktierung gelangen können.

Das Auswertemodul 60 umfasst die elektronischen Hauptkomponenten des Spannkraftmessgerätes. Diese sind in einer nur schematisch dargestellten Auswerteeinrichtung 64 gebündelt. Es handelt sich um einen Messverstärker 64A, der die über die Datenverbindungseinrichtung 68 erfassten Messdaten aufbereitet und digitalisiert. Dabei nutzt er Kalibrierungsdaten, die zuvor über die Datenleitung aus dem Speicher 30, 50 des Sensormoduls ausgelesen wurden. Zur Steuerung dieses Messkraftverstärkers ist ein Mikroprozessor 64B vorgesehen, der auf einen Speicher 64C zugreift. Hier können die durch den Messverstärker 64A erfassten und aufbereiteten Daten abgelegt werden. Zusätzlich verfügt die Auswerteeinrichtung 64 über eine Funkschnittstelle 64E, vorzugsweise vom Standard Bluetooth LE, über die die Daten aus dem Speicher 64C an eine Zentralinstanz, wie beispielsweise einen Personal Computer, in der Werkshalle übermittelt werden können. Weiterhin verfügt das Auswertemodul 60 über einen USB-Anschluss 66, der zum Aufladen eines Energiespeichers 70 des Auswertemoduls genutzt werden kann. Zusätzlich können hierüber bei Bedarf auch Daten aus dem Speicher 64C an einen Personal Computer oder einen Tablet-Computer übertragen werden. Als Anzeigeeinrichtung weist das Auswertemodul 60 eine LED 69 auf, die verschiedene wesentliche Statusangaben signalisieren kann, so beispielsweise den Status der Funkverbindung der Funkschnittstelle 64E, einen Ladestand des Energiespeichers 70 oder aber auch den Bedarf, das angekoppelte Sensormodul neu zu kalibrieren, wobei Letzteres sich aus den Kalibrierungsdaten aus den Speichern 30, 50 ergeben kann.

Wie die Fig. 6 und 7 verdeutlichen, kann das gleiche Auswertemodul 60 sowohl an dem Sensormodul 20 als auch an dem Sensormodul 40 angekoppelt werden. In der Praxis wird hierdurch ein wesentlicher Vorteil erzielt. Die teuren Teilkomponenten des Auswertemoduls 60 müssen nicht in gleicher Stückzahl angeschafft werden wie Sensormodule 20, 40. Stattdessen können grundsätzlich beliebig viele Sensormodule 20, 40 mit dem gleichen Auswertemodul verbunden werden, um einen Messvorgang durchzuführen. Auch andere Sensormodule wie solche zur Messung einer axialen Spannkraft sind möglich.

## Patentansprüche

1. Spannkraftmessgerät (10) für Radialspannmittel (100) mit den folgenden Merkmalen:
a. das Spannkraftmessgerät (10) verfügt über mindestens einen Kraftsensor (26; 46) zur Erfassung einer Spannkraft, die von einem Spannmittel bezogen auf eine Mittelachse (A) in Radialrichtung nach außen oder in Radialrichtung nach innen auf mindestens eine Messfläche (24; 44) des Spannkraftmessgerätes (10) aufgebracht wird, und
b. das Spannkraftmessgerät (10) verfügt über eine Auswerteeinrichtung (64) zur Auswertung von Sensordaten des mindestens einen Kraftsensors (26; 46), und
c. die Auswerteeinrichtung (64) umfasst:
• eine Funkschnittstelle (64E) zur Übermittlung von Daten an einen Empfängerund/oder
• einen Speicher (64C) zur Ablage von Daten zum Zwecke des späteren Auslesens über eine Kabelverbindung oder eine Funkverbindung und/oder
• eine Anzeigeeinrichtung zur Anzeige von Daten, und
d. das Spannkraftmessgerät (10) ist als modulares Spannkraftmessgerät ausgebildet und weist mindestens zwei Module, nämlich ein Auswertemodul (60) und ein Sensormodul (20; 40), auf und
e. das Sensormodul (20; 40) umfasst mindestens die eine Messfläche (24; 44) und den Kraftsensor (26; 46), und
f. das Auswertemodul (60) weist die Funkschnittstelle (64E), den Speicher (64C) und/oder die Anzeigeeinrichtung auf, und
g. das Spannkraftmessgerät (10) weist eine Kopplungseinrichtung (80) auf, und
h. das Sensormodul (20; 40) und das Auswertemodul (60) sind zur mechanischen Ankoppelung aneinander mittels der Kopplungseinrichtung (80) ausgebildet und weisen jeweils eine Datenverbindungseinrichtung (28, 48, 68) auf, wobei die beiden Datenverbindungseinrichtungen (28, 48, 68) bei mechanischer Ankoppelung des Sensormoduls (20; 40) an das Auswertemodul (60) miteinander zur Herstellung einer Datenverbindung verbunden werden können,
**gekennzeichnet durch** mindestens eines der folgenden Merkmale:
i. das Auswertemodul (60) ist dafür ausgebildet, über die Datenverbindung zusätzlich zu Sensordaten des mindestens einen Kraftsensors (26; 46) und ggf. weiterer Sensoren des Sensormoduls (20; 40) mindestens die eindeutige Kennzeichnung des Sensormoduls (20; 40) auszulesen und gemeinsam mit den Sensordaten abzulegen, zu übermitteln oder anzuzeigen und/oder
j. das Auswertemodul (60) ist dafür ausgebildet, über die Datenverbindung zusätzlich zu Sensordaten des mindestens einen Kraftsensors (26; 46) und ggf. weiterer Sensoren des Sensormoduls Kalibrierungsdaten hinsichtlich eines oder mehrerer Sensoren (26; 46) des Sensormoduls (20; 40) auszulesen und zur Korrektur der Sensordaten heranzuziehen und/oder Kalibrierungsdaten in einen Speicher (30; 50) des Sensormoduls (20; 40) zu schreiben.

2. Spannkraftmessgerät (10) für Radialspannmittel (100) nach Anspruch 1 mit dem folgenden zusätzlichen Merkmal:
a. das Auswertemodul (60) umfasst mindestens einen zusätzlichen Sensor (64G, 64H), insbesondere
• einen Sensor (64G) zur Erfassung der Drehzahl und/oder
• einen Sensor (64 E) zur Erfassung einerTemperatur.

3. Spannkraftmessgerät für Radialspannmittel nach Anspruch 1 oder 2 mit dem folgenden zusätzlichen Merkmal:
a. das Auswertemodul umfasst mindestens einen Messverstärker (64A).

4. Spannkraftmessgerät (10) für Radialspannmittel (100) nach Anspruch 1 mit mindestens einem der folgenden zusätzlichen Merkmale:
a. das Auswertemodul (60) verfügt über eine Funkschnittstelle (64E) nach dem Bluetooth-Standard, insbesondere vom Typ "Bluetooth Low Energy (LE)" und/oder
b. das Auswertemodul (60) verfügt zum Zwecke des Ladens eines Energiespeichers (70) des Spannkraftmessgeräts (10) und/oder zum Zwecke der Übermittlung von gespeicherten Messdaten an einen Rechner über eine USB-Schnittstelle (66).

5. Spannkraftmessgerät (10) für Radialspannmittel (100) nach einem der vorstehenden Ansprüche mit dem folgenden zusätzlichen Merkmal:
a. das Sensormodul (20; 40) verfügt über einen Speicher (30; 50), in welchem mindestens eine der folgenden Informationen abgelegt ist:
• Daten zum Modell des Sensormoduls und/oder
• eine eindeutige Kennzeichnung des Sensormoduls, und/oder
• Kalibrierungsdaten hinsichtlich eines oder mehrerer Sensoren des Sensormoduls, und/oder
• Daten hinsichtlich durchgeführter oder in Zukunft durchzuführender Werkskalibrierungen.

6. Spannkraftmessgerät (10) für Radialspannmittel (100) nach einem der vorstehenden Ansprüche mit dem folgenden zusätzlichen Merkmal:
a. eines der Module (60) verfügt über einen Energiespeicher (70) in Form einer Batterie oder eines Akkumulators und ist dafür ausgebildet, elektronische Komponenten des anderen Moduls (20; 40) im Betrieb mit Energie zu versorgen.

7. Spannkraftmessgerät (10) für Radialspannmittel (100) nach einem der vorstehenden Ansprüche mit einem der folgenden zusätzlichen Merkmale:
a. die Kopplungseinrichtung (80) weist eine Mehrzahl von Schrauben (82) auf, vorzugsweise maximal vier Schrauben, mittels derer das Auswertemodul (60) am Sensormodul (20; 40) festschraubbar ist, oder
b. die Kopplungseinrichtung ist als werkzeuglos koppelbare Kopplungseinrichtung ausgebildet, insbesondere als Bajonettkopplungseinrichtung.

8. Spannkraftmessgerät (10) für Radialspannmittel (100) nach einem der vorstehenden Ansprüche mit den folgenden zusätzlichen Merkmalen:
a. die Datenverbindungseinrichtung (28; 48) weist auf der Seite eines der Module (20; 40) Kontaktflächen (28A-28E; 48A-48E) auf, und
b. die Datenverbindungseinrichtung (68) weist auf der Seite des anderen Moduls (60) federkraftbelastete Kontaktelemente (68A-68E) zur Anlage an der den Kontaktflächen (28A-28E) auf,
vorzugsweise mit einem der folgenden zusätzlichen Merkmale:
c. die Kontaktflächen (28A-28E; 48A-48E) und die Kontaktelemente (68A-68E) sind zur Anlage in einer oder zwei Relativdrehstellungen der Module (20, 40, 60) zueinander ausgebildet und es ist eine Ausrichtungshilfe vorgesehen, die eine Koppelung der Module (20, 40 60) nur in dieser einen oder diesen beiden Ausrichtungen gestattet, oder
d. die Kontaktflächen sind als konzentrische ringförmige Kontaktflächen zur Anlage an den Kontaktelementen unabhängig von der Relativdrehstellungen der Module zueinander ausgebildet.

9. Spannkraftmessgerät (10) für Radialspannmittel (100) nach einem der vorstehenden Ansprüche mit den folgenden zusätzlichen Merkmalen:
a. die Datenverbindungseinrichtungen (28, 48, 68) sind als kombinierte analoge und digitale Datenverbindungseinrichtung ausgebildet.

10. Spannkraftmessgerät (10) für Radialspannmittel (100) nach einem der vorstehenden Ansprüche mit dem folgenden zusätzlichen Merkmal:
a. das Auswertemodul (60) ist dafür ausgebildet, über die Datenverbindung zusätzlich zu Sensordaten des mindestens einen Kraftsensors (26; 46) und ggf. weiterer Sensoren des Sensormoduls Daten hinsichtlich durchgeführter oder in Zukunft durchzuführender Werkskalibrierungen auszulesen und bei diesbezüglichem Handlungsbedarf eine Signalisierung vorzunehmen.

11. Spannkraftmessgerät (10) für Radialspannmittel (100) nach einem der vorstehenden Ansprüche mit mindestens einem der folgenden zusätzlichen Merkmale:
a. die Module (20, 40, 60) sind zur Kommunikation über die Datenverbindung nach dem Standard IEEE 1451 ausgebildet, wobei vorzugsweise vorgesehen ist, dass das Sensormodul im Speicher (30; 50) über ein TEDS (Transducer Electronic Data Sheet) nach diesem Standard verfügt, und/oder
b. das Auswertemodul (60) umfasst mindestens eine Status-Anzeige (69) zur Anzeige des Status eines Energiespeichers (70) und/oder zur Anzeige des Status einer Datenverbindung mit dem Sensormodul (20; 40) und/oder zur Anzeige des Status einer funkbasierten Verbindung, und/oder
c. das Auswertemodul (60) ist dafür ausgebildet, die Funkschnittstelle (64E) zur Übermittlung von Sensordaten an eine Zentralstation nur zeitweise zu aktivieren, insbesondere gemäß einem vorgegebenen Zeitplan oder in Reaktion auf die Erfassung von Daten von einem Sensormodul (20; 40), und/oder
d. der mindestens eine Kraftsensor (26; 46) der Sensoreinheit (20; 40) ist als Dehnungsmessstreifen (DMS) ausgebildet.

12. Spannkraftmessgerät (10) für Radialspannmittel (100) nach einem der vorstehenden Ansprüche mit dem folgenden zusätzlichen Merkmal:
a. das Spannkraftmessgerät (10) ist als Sonder-Spannkraftmessgerät ausgebildet und mit mindestens einer der folgenden Besonderheiten ausgestaltet:
• das Sensormodul weist mehrere Kraftsensoren auf, die in unterschiedlichen in Richtung der Mittelachse gegeneinander versetzten Ebenen angeordnet sind, und/oder
• das Sensormodul weist mehrere Kraftsensoren auf, die bezogen auf die Mittelachse in einer gemeinsamen Ebene, jedoch tangential gegeneinander versetzt angeordnet sind,
vorzugsweise mit dem zusätzlichen Merkmal:
b. es ist ein mehrkanaliger Messverstärker (64A) zur Auswertung der Sensordaten vorgesehen oder es sind mehrere Messverstärker zur getrennten Verstärkung der Sensordaten unterschiedlicher Kraftsensoren vorgesehen.

## Claims

1. Clamping force measuring instrument (10) for radial clamping means (100) having the following features:
a. the clamping force measuring instrument (10) has at least one force sensor (26; 46) for detecting a clamping force applied to at least one measurement surface (24; 44) of the clamping force measuring instrument (10) by a clamping means in a radial direction outwards or in a radial direction inwards relative to a centre axis (A), and
b. the clamping force measuring instrument (10) has an evaluation device (64) for evaluating sensor data of the at least one force sensor (26; 46), and
c. the evaluation device (64) comprises:
• a radio interface (64E) for communicating data to a receiver and/or
• a memory (64C) for storing data for the purpose of later read-out via a cable connection or a radio connection and/or
• a display device for displaying data, and
d. the clamping force measuring instrument (10) is embodied as a modular clamping force measuring instrument and comprises at least two modules, namely an evaluation module (60) and a sensor module (20; 40), and
e. the sensor module (20; 40) comprises at least said one measurement surface (24; 44) and the force sensor (26; 46), and
f. the evaluation module (60) has the radio interface (64E), the memory (64C) and/or the display device, and
g. the clamping force measuring instrument (10) has a coupling device (80), and
h. the sensor module (20; 40) and the evaluation module (60) are configured for mechanical coupling to one another by means of the coupling device (80) and each have a data connection device (28, 48, 68), wherein the two data connection devices (28, 48, 68) can be connected to one another in order to produce a data connection in the event of the sensor module (20; 40) being mechanically coupled to the evaluation module (60), **characterized by** at least one of the following features:
i. the evaluation module (60) is configured to read out at least the unique identification of the sensor module (20; 40) via the data connection in addition to sensor data of the at least one force sensor (26; 46) and optionally further sensors of the sensor module (20; 40) and to store, to communicate or to display said identification together with the sensor data, and/or
j. the evaluation module (60) is configured to read out calibration data regarding one or a plurality of sensors (26; 46) of the sensor module (20; 40) via the data connection in addition to sensor data of the at least one force sensor (26; 46) and optionally further sensors of the sensor module and to use said calibration data for correcting the sensor data and/or to write calibration data to a memory (30; 50) of the sensor module (20; 40).

2. Clamping force measuring instrument (10) for radial clamping means (100) according to Claim 1 having the following additional feature:
a. the evaluation module (60) comprises at least one additional sensor (64G, 64H), in particular
• a sensor (64G) for detecting the rotational speed and/or
• a sensor (64E) for detecting a temperature.

3. Clamping force measuring instrument for radial clamping means according to Claim 1 or 2 having the following additional feature:
a. the evaluation module comprises at least one measurement amplifier (64A).

4. Clamping force measuring instrument (10) for radial clamping means (100) according to Claim 1 having at least one of the following additional features:
a. the evaluation module (60) has a radio interface (64E) according to the Bluetooth standard, in particular of the "Bluetooth Low Energy (LE)" type and/or
b. the evaluation module (60) has a USB interface (66) for the purpose of charging an energy store (70) of the clamping force measuring instrument (10) and/or for the purpose of communicating stored measurement data to a computer.

5. Clamping force measuring instrument (10) for radial clamping means (100) according to any of the preceding claims having the following additional feature:
a. the sensor module (20; 40) has a memory (30; 50), in which at least one of the following items of information is stored:
• data concerning the model of the sensor module and/or
• a unique identification of the sensor module, and/or
• calibration data regarding one or a plurality of sensors of the sensor module, and/or
• data regarding factory calibrations which have been carried out or are to be carried out in the future.

6. Clamping force measuring instrument (10) for radial clamping means (100) according to any of the preceding claims having the following additional feature:
a. one of the modules (60) has an energy store (70) in the form of a battery or a rechargeable battery and is configured to supply electronic components of the other module (20; 40) with energy during operation.

7. Clamping force measuring instrument (10) for radial clamping means (100) according to any of the preceding claims having one of the following additional features:
a. the coupling device (80) has a plurality of screws (82), preferably a maximum of four screws, by means of which the evaluation module (60) is able to be fixedly screwed to the sensor module (20; 40), or
b. the coupling device is embodied as a coupling device that is couplable in a toolless manner, in particular as a bayonet coupling device.

8. Clamping force measuring instrument (10) for radial clamping means (100) according to any of the preceding claims having the following additional features:
a. the data connection device (28; 48) has contact pads (28A-28E; 48A-48E) on the side of one of the modules (20; 40), and
b. the data connection device (68) has, on the side of the other module (60), spring-force-loaded contact elements (68A-68E) for bearing against the contact pads (28A-28E),
preferably having one of the following additional features:
c. the contact pads (28A-28E; 48A-48E) and the contact elements (68A-68E) are configured for bearing in one or two relative rotational positions of the modules (20, 40, 60) with respect to one another and an orientation aid is provided, which allows the modules (20, 40, 60) to be coupled only in this one or these two orientations, or
d. the contact pads are embodied as concentric ring-shaped contact pads for bearing against the contact elements independently of the relative rotational positions of the modules with respect to one another.

9. Clamping force measuring instrument (10) for radial clamping means (100) according to any of the preceding claims having the following additional features:
a. the data connection devices (28, 48, 68) are embodied as a combined analogue and digital data connection device.

10. Clamping force measuring instrument (10) for radial clamping means (100) according to any of the preceding claims having the following additional feature:
a. the evaluation module (60) is configured to read out data regarding factory calibrations that have been carried out, or are to be carried out in the future, via the data connection in addition to sensor data of the at least one force sensor (26; 46) and optionally further sensors of the sensor module and to carry out signalling in the event of a need for action in this regard.

11. Clamping force measuring instrument (10) for radial clamping means (100) according to any of the preceding claims having at least one of the following additional features:
a. the modules (20, 40, 60) are configured for communication via the data connection according to the IEEE 1451 standard, wherein provision is preferably made for the sensor module to have in the memory (30; 50) a TEDS (Transducer Electronic Data Sheet) according to said standard, and/or
b. the evaluation module (60) comprises at least one status display (69) for displaying the status of an energy store (70) and/or for displaying the status of a data connection to the sensor module (20; 40) and/or for displaying the status of a radio-based connection, and/or
c. the evaluation module (60) is configured to activate the radio interface (64E) for communicating sensor data to a central station only at times, in particular in accordance with a predefined time schedule or in reaction to the detection of data by a sensor module (20; 40), and/or
d. the at least one force sensor (26; 46) of the sensor unit (20; 40) is embodied as a strain gauge (DMS).

12. Clamping force measuring instrument (10) for radial clamping means (100) according to any of the preceding claims having the following additional feature:
a. the clamping force measuring instrument (10) is embodied as a special clamping force measuring instrument and is configured with at least one of the following special features:
• the sensor module has a plurality of force sensors arranged in different planes offset relative to one another in the direction of the centre axis, and/or
• the sensor module has a plurality of force sensors arranged in a common plane, but in a manner offset tangentially in relation to one another, relative to the centre axis,
preferably having the following additional feature:
b. a multi-channel measurement amplifier (64A) for evaluating the sensor data is provided or a plurality of measurement amplifiers for separately amplifying the sensor data of different force sensors are provided.

## Revendications

1. Appareil de mesure de force de serrage (10) pour des moyens de serrage radial (100), ayant les particularités suivantes :
a. l'appareil de mesure de force de serrage (10) dispose d'au moins un capteur de force (26 ; 46) pour détecter une force de serrage qui est exercée par un moyen de serrage par rapport à un axe central (A) dans la direction radiale vers l'extérieur ou dans la direction radiale vers l'intérieur sur au moins une surface de mesure (24 ; 44) de l'appareil de mesure de force de serrage (10), et
b. l'appareil de mesure de force de serrage (10) dispose d'un dispositif d'évaluation (64) pour évaluer des données de capteur du au moins un capteur de force (26 ; 46), et
c. le dispositif d'évaluation (64) comprend :
• une interface radio (64E) pour transmettre des données à un récepteur, et/ou
• une mémoire (64C) pour stocker des données en vue d'une lecture ultérieure par une liaison par câble ou une liaison radio, et/ou
• un dispositif d'affichage pour afficher des données, et
d. l'appareil de mesure de force de serrage (10) est réalisé sous la forme d'un appareil de mesure de force de serrage modulaire et présente au moins deux modules, à savoir un module d'évaluation (60) et un module de capteur (20 ; 40), et
e. le module de capteur (20 ; 40) comprend au moins ladite une surface de mesure (24 ; 44) et le capteur de force (26 ; 46), et
f. le module d'évaluation (60) présente l'interface radio (64E), la mémoire (64C) et/ou le dispositif d'affichage, et
g. l'appareil de mesure de force de serrage (10) présente un dispositif de couplage (80), et
h. le module de capteur (20; 40) et le module d'évaluation (60) sont réalisés pour l'accouplement mécanique l'un avec l'autre au moyen du dispositif de couplage (80) et présentent respectivement un dispositif de liaison de données (28, 48, 68), les deux dispositifs de liaison de données (28, 48, 68), en cas d'accouplement mécanique du module de capteur (20 ; 40) avec le module d'évaluation (60), pouvant être reliés l'un à l'autre pour établir une liaison de données,
**caractérisé par** au moins l'une des particularités suivantes :
i. le module d'évaluation (60) est réalisé pour lire par la liaison de données, en plus des données de capteur du au moins un capteur de force (26 ; 46) et le cas échéant d'autres capteurs du module de capteur (20 ; 40), au moins l'identification univoque du module de capteur (20 ; 40) et pour les stocker, transmettre ou afficher avec les données de capteur, et/ou
j. le module d'évaluation (60) est réalisé pour lire par la liaison de données, en plus des données de capteur du au moins un capteur de force (26 ; 46) et le cas échéant d'autres capteurs du module de capteur, des données d'étalonnage concernant un ou plusieurs capteurs (26 ; 46) du module de capteur (20 ; 40) et pour les utiliser pour corriger les données de capteur et/ou pour écrire des données d'étalonnage dans une mémoire (30 ; 50) du module de capteur (20 ; 40).

2. Appareil de mesure de force de serrage (10) pour des moyens de serrage radial (100) selon la revendication 1, ayant la particularité supplémentaire suivante :
a. le module d'évaluation (60) comprend au moins un capteur supplémentaire (64G, 64H), en particulier
• un capteur (64G) pour détecter la vitesse de rotation, et/ou
• un capteur (64E) pour détecter une température.

3. Appareil de mesure de force de serrage pour des moyens de serrage radial selon la revendication 1 ou 2, ayant la particularité supplémentaire suivante :
a. le module d'évaluation comprend au moins un amplificateur de mesure (64A).

4. Appareil de mesure de force de serrage (10) pour des moyens de serrage radial (100) selon la revendication 1, ayant au moins l'une des particularités supplémentaires suivantes :
a. le module d'évaluation (60) dispose d'une interface radio (64E) selon la norme Bluetooth, en particulier de type « Bluetooth Low Energy (LE) », et/ou
b. le module d'évaluation (60) dispose d'une interface USB (66) en vue du chargement d'un accumulateur d'énergie (70) de l'appareil de mesure de force de serrage (10) et/ou en vue de la transmission de données de mesure mémorisées à un ordinateur.

5. Appareil de mesure de force de serrage (10) pour des moyens de serrage radial (100) selon l'une quelconque des revendications précédentes, ayant la particularité supplémentaire suivante :
a. le module de capteur (20; 40) dispose d'une mémoire (30 ; 50) dans laquelle est stockée au moins l'une des informations suivantes :
• des données au sujet du modèle du module de capteur, et/ou
• une identification univoque du module de capteur, et/ou
• des données d'étalonnage concernant un ou plusieurs capteurs du module de capteur, et/ou
• des données concernant des étalonnages en usine effectués ou à effectuer à l'avenir.

6. Appareil de mesure de force de serrage (10) pour des moyens de serrage radial (100) selon l'une quelconque des revendications précédentes, ayant la particularité supplémentaire suivante :
a. l'un des modules (60) dispose d'un accumulateur d'énergie (70) sous la forme d'une batterie ou d'un accumulateur et est réalisé pour alimenter en énergie les composants électroniques de l'autre module (20 ; 40) en cours de fonctionnement.

7. Appareil de mesure de force de serrage (10) pour des moyens de serrage radial (100) selon l'une quelconque des revendications, ayant l'une des particularités supplémentaires suivantes :
a. le dispositif de couplage (80) présente une pluralité de vis (82), de préférence au maximum quatre vis, au moyen desquelles le module d'évaluation (60) peut être vissé sur le module de capteur (20 ; 40), ou
b. le dispositif de couplage est réalisé sous la forme d'un dispositif de couplage pouvant être couplé sans outil, en particulier sous la forme d'un dispositif à couplage à baïonnette.

8. Appareil de mesure de force de serrage (10) pour des moyens de serrage radial (100) selon l'une quelconque des revendications, ayant les particularités supplémentaires suivantes :
a. le dispositif de liaison de données (28; 48) présente des surfaces de contact (28A-28E ; 48A-48E) sur le côté d'un des modules (20 ; 40), et
b. le dispositif de liaison de données (68) présente sur le côté de l'autre module (60) des éléments de contact à ressort (68A-68E) destinés à venir en butée contre les surfaces de contact (28A-28E),
ayant de préférence l'une des particularités supplémentaires suivantes :
c. les surfaces de contact (28A-28E ; 48A-48E) et les éléments de contact (68A-68E) sont réalisés pour venir en butée dans une ou deux positions de rotation relatives des modules (20, 40, 60) les uns par rapport aux autres, et un dispositif d'aide à l'alignement est prévu qui permet un couplage des modules (20, 40 60) uniquement dans ledit un ou lesdits deux alignements, ou
d. les surfaces de contact sont réalisées sous la forme de surfaces de contact annulaires concentriques pour venir en butée contre les éléments de contact indépendamment des positions de rotation relatives des modules les uns par rapport aux autres.

9. Appareil de mesure de force de serrage (10) pour des moyens de serrage radial (100) selon l'une quelconque des revendications, ayant les particularités supplémentaires suivantes :
a. les dispositifs de liaison de données (28, 48, 68) sont réalisés sous la forme de dispositifs de liaison de données analogiques et numériques combinés.

10. Appareil de mesure de force de serrage (10) pour des moyens de serrage radial (100) selon l'une quelconque des revendications, ayant la particularité supplémentaire suivante :
a. le module d'évaluation (60) est réalisé pour lire par la liaison de données, en plus des données de capteur du au moins un capteur de force (26 ; 46) et le cas échéant des autres capteurs du module de capteur, des données concernant des étalonnages en usine effectués ou à effectuer à l'avenir et pour effectuer une signalisation si des mesures sont à prendre à cet effet.

11. Appareil de mesure de force de serrage (10) pour des moyens de serrage radial (100) selon l'une quelconque des revendications, ayant au moins l'une des particularités supplémentaires suivantes :
a. les modules (20, 40, 60) sont réalisés pour communiquer par la liaison de données selon la norme IEEE 1451, dans lequel il est prévu de préférence que le module de capteur dispose dans la mémoire (30 ; 50) d'une fiche technique électronique de transducteur (TEDS, « Transducer Electronic Data Sheet ») selon cette norme, et/ou
b. le module d'évaluation (60) comprend au moins un affichage d'état (69) pour afficher l'état d'un accumulateur d'énergie (70) et/ou pour afficher l'état d'une liaison de données avec le module de capteur (20; 40) et/ou pour afficher l'état d'une liaison radio, et/ou
c. le module d'évaluation (60) est réalisé pour activer l'interface radio (64E) seulement de façon provisoire pour transmettre des données de capteur à une station centrale, en particulier selon un planning prédéfini ou en réaction à la détection de données d'un module de capteur (20 ; 40), et/ou
d. ledit au moins un capteur de force (26 ; 46) de l'unité de capteur (20 ; 40) est réalisé sous la forme d'une jauge de contrainte (DMS).

12. Appareil de mesure de force de serrage (10) pour des moyens de serrage radial (100) selon l'une quelconque des revendications, ayant la particularité supplémentaire suivante :
a. l'appareil de mesure de force de serrage (10) est réalisé sous la forme d'un appareil de mesure de force de serrage spécial et est configuré avec au moins l'une des spécificités suivantes :
• le module de capteur présente plusieurs capteurs de force qui sont disposés sur différents plans, décalés les uns par rapport aux autres en direction de l'axe central, et/ou
• le module de capteur présente plusieurs capteurs de force qui sont disposés sur un plan commun par rapport à l'axe central, mais de manière tangentiellement décalée les uns par rapport aux autres,
ayant de préférence la particularité supplémentaire :
b. un amplificateur de mesure à plusieurs canaux (64A) est prévu pour l'évaluation des données de capteur, ou plusieurs amplificateurs de mesure sont prévus pour l'amplification séparée des données de capteur de différents capteurs de force.
